# EUROPEAN PATENT SPECIFICATION

(11) **EP 1 232 223 B1**
(45) Date of publication and mention of the grant of the patent: **12.11.2003**
(21) Application number: 00957432.8
(22) Date of filing: 11.08.2000
(51) Int. Cl.: C09J 7/02, B32B 27/00

(54) **ADHESIVE SHEET AND COATING ADHESIVE SHEET**
KLEBEBAND UND BESCHICHTUNGSKLEBEBAND
FEUILLE ADHESIVE ET REVETEMENT DE FEUILLE ADHESIVE

(30) Priority: 10.09.1999 JP 25698499
(43) Date of publication of application: 21.08.2002
(73) Proprietor: 3M Innovative Properties Company, Saint Paul, MN 55133-3427 (US)
(72) Inventor: SAITOH, Tsuneyoshi, Higashine-city, Yamagata 999-3772 (JP)
(74) Representative: VOSSIUS & PARTNER
(86) International application number: US0022260
(87) International publication number: WO01018139

(56) References cited:
- EP-A- 0 467 570
- WO-A-98/08906
- WO-A-98/28377

## Description

### Field of the Invention

The present invention relates to an adhesive sheet and, more particularly, to an adhesive sheet to be applied to adherends used outdoors, for example, walls of buildings, windowpanes, and bodies of vehicles, aircrafts and ships. The present invention also relates to an adhesive sheet provided with a protective layer to improve the dirt resistance of the adhesive sheet. Furthermore, the present invention relates to a coating adhesive sheet suited for coating the adhesive sheet of the present invention.

### Background of the Invention

In an adhesive sheet such as film or sheet with an adhesive for outdoor application, for example, vinyl chloride resin, polyester resin, polyolefin resin and acrylic resin are usually used as a substrate of the adhesive sheet because of excellent pliability. To improve the dirt resistance of the surface of the adhesive sheet, a protective layer is usually provided on the surface of the adhesive sheet. The protective layer is a resin layer containing an acrylic resin or a fluorine copolymer and is usually made from paint containing these resins and a crosslinking agent or a curing agent. The acrylic resin and fluorine copolymer are usually modified so that they can be crosslinked (or cured).

Specific examples of paint for forming a protective layer include fluorine paint "ZEFFLEL™ GK series" manufactured by Daikin Industries Co., Ltd. In the case of the protective layer made from the above-described fluorine paint, however, the water contact angle is comparatively high (usually 70 degree or higher) and, therefore, satisfactory properties can not be exhibited to both of a hydrophilic dirt and a lipophilic dirt.

In the case of the hydrophilic dirt such as sludge, cloud of dust, dust, raindrop dirt or the like, since the surface of the protective layer of the adhesive sheet repels water, water droplets fall down easily. However, the dirt is adhered onto a trace of dried water droplets formed on the surface of the protective layer to form point-shaped dirt. When such dirt is once adhered, it becomes difficult to expect that the dirt is naturally removed utilizing a natural washing action of rain because the hydrophilicity of the surface of the protective layer is poor. In the case of the lipophilic dirt such as exhaust gas, smoke or the like, the lipophilic dirt is adhered easily because the surface of the protective layer of the adhesive sheet has comparatively high lipophilicity.

Therefore, incorporation of a decomposable hydrophilic agent as a dirt resistant agent into paint has been attempted to solve the above-described problems. As disclosed in Japanese Unexamined Patent Publication (Kokai) No. 8-337771, the hydrophilic agent generates hydrophilic chemical species by chemical decomposition, thereby imparting hydrophilicity to the surface of the coated film. Accordingly, the coated film formed by using such hydrophilic agent-containing paint has a water contact angle of the surface that is reduced to 70 degree or lower. When the water contact angle of the surface of the coated film is sufficiently low, the hydrophilic dirt is not adhered easily. On the other hand, the hydrophilic dirt can be easily removed by natural washing with rain or artificial washing with water because the surface of the coated film is easily wetted with water. Accordingly, the dirt resistance to hydrophilic dirt and lipophilic dirt could also be improved.

### Summary of the Invention

The present invention provides an adhesive sheet comprising a flexible substrate, an adhesive layer provided on the back surface of the flexible substrate, and a protective layer provided on the front surface of the flexible substrate, characterized in that:
the protective layer is a thermoplastic resin layer containing (a) a fluorine copolymer, (b) a non-fluorine polymer, and (c) a hydrophilic agent.

The present invention provides a coating adhesive sheet comprising a flexible substrate, an adhesive layer provided on the back surface of the flexible substrate, and a protective layer provided on the front surface of the flexible substrate, the protective layer being a thermoplastic resin layer containing (a) a fluorine copolymer, (b) a non-fluorine polymer, and (c) a hydrophilic agent, characterized in that:
the coating adhesive sheet comprises a flexible substrate and an adhesive layer provided on the back surface of the flexible substrate, and the adhesive layer contains a coupling agent.

### Detailed Description

In the case where a coated film is formed from the hydrophilic agent-containing paint disclosed in Japanese Unexamined Patent Publication (Kokai) No. 8-337771, however, it is essential to crosslink (or cure) the coated film. Accordingly, there are following problems considering use of the adhesive sheet as the protective layer.
(1) A layer of the hydrophilic agent can not be formed stably on the surface of the protective layer and, therefore, it is difficult to maintain dirt resistance for a long period of time (e.g. four months or longer in the case of adhesive sheet for outdoor application). The reason why such difficulty arises is that migration of the hydrophilic agent from the interior of the coated film to the surface rarely occurs in the case of the crosslinked (cured) coated film.
(2) The flexibility (pliability) of the whole adhesive sheet is lowered in comparison with the crosslinked coated film. The flexibility of the whole adhesive sheet is important on application, for example, to an adherend with distortion on the surface or an adherend requiring cdnfonnability (e.g. those having the surface including the curved surface).

On the other hand, another adhesive sheet (second adhesive sheet) may also be applied onto the surface of an adhesive sheet (particularly referred to as a "first adhesive sheet" herein) applied onto the surface of adherends for outdoor application, such as walls of buildings, signboards, etc., that is, the surface of the protective layer. For example, this is a case where a first sheet as a ground is first applied onto the surface of a signboard and then a second adhesive sheet cut into forms of design, letter, etc. is applied thereon, thereby coating (decorating) the surface of the first adhesive sheet with the second adhesive sheet At this.time, since the whole surface of the first adhesive sheet is not coated with the second adhesive sheet even after applying the second adhesive sheet, a layer of a hydrophilic agent may be formed stably on the surface of the protective layer of the first adhesive sheet. The second adhesive sheet in contact with the layer of the hydrophilic agent can be applied with sufficient adhesion in a normal state, however, there is a fear that adhesion (peel resistance) between the surface of the protective layer of the first adhesive sheet and the second adhesive sheet is lowered, in other words, the water resistant adhesion is lowered when exposed to water such as rainwater for a long time.

The adhesive sheet and coating adhesive sheet according to the present invention can have various embodiments. The present invention will be described by way of the following embodiments. The present invention first will be described in view of its operation to facilitate the understanding of the present invention.

In the adhesive sheet according to the first embodiment of the present invention, the adhesive sheet comprising a flexible substrate, an adhesive layer provided on the back surface of the flexible substrate, and a protective layer provided on the surface of the flexible substrate is characterized in that: the protective layer is a thermoplastic resin layer containing:
(a) a fluorine copolymer,
(b) a non-fluorine polymer, and
(c) a hydrophilic agent.

The term "hydrophilic agent" used herein refers to a compound having a decomposable protective group (e.g. fluorine-containing substituent such as alkyl fluoride group) in a molecule, which reacts due to heat or light to generate chemical species. For example, the dirt resistant agent disclosed in Unexamined Patent Publication (Kokai) No. 8-337771 can be advantageously used as such a compound, which is described in detail hereinafter.

The fact, that the protective layer is a "thermoplastic resin layer", means that the layer is not substantially crosslinked and cured. That is, it means that the protective layer:
(i) does not substantially contain a crosslinking agent and a curing agent, or
(ii) does not contain a functional group capable of reacting with the crosslinking agent or curing agent (e.g. active hydrogen such as hydroxyl group) in the molecule of a fluorine copolymer and a non-fluorine polymer even if it contains the crosslinking agent or curing agent.

In the adhesive sheet of the present invention, since the protective layer is a thermoplastic resin layer described above, it becomes very easy to cause migration of the hydrophilic agent as the component (c) from the interior to the surface of the protective layer, thereby making it possible to stably form a hydrophilic agent layer. Accordingly, it becomes very easy to maintain the dirt resistance of the surface of the protective layer for a long period of time (e.g. four months or longer). As a result of an improvement in dirt resistance, when using the adhesive sheet outdoors, the dirt adhered on the adhesive sheet is naturally removed by rain, thereby making it possible to maintain good appearance.

Stable formation of the above-described hydrophilic agent layer can be confirmed whether or not the water contact angle of the surface of the protective layer was reduced to a comparatively small value. According to the present invention, it is very easy to reduce the water contact angle, determined in a contact angle meter, of the surface of the protective layer to 50 degrees or lower. When the water contact angle of the surface of the protective layer is not more than 50 degrees, the dirt resistance can be effectively enhanced and maintained for a long period of time. In view of the dirt resistance, the lower limit of the water contact angle of the surface of the protective layer is not specifically limited, but is usually 5 degrees or higher so as not to adversely effect the other effect (e.g. improvement in adhesion between the substrate and protective layer). To further enhance the dirt resistance and other effect in well-balanced state, the water contact angle of the surface of the protective layer is preferably within a range from 10 to 47 degrees, particularly from 20 to 45 degrees.

Since the protective layer is a thermoplastic resin layer described above, the flexibility (pliability) of the whole adhesive sheet is not likely to be significantly lowered. The flexibility of the whole adhesive sheet is important on application, for example, to an adherend with distortion on the surface or an adherend requiring conformability (e.g. those having the surface including the curved surface). From such a point of view, the elongation at break of the whole adhesion sheet is preferably not less than 100%.

On the other hand, when another adhesive sheet (second adhesive sheet) is applied onto the surface (i.e. surface of the protective layer) of an adhesive sheet, the second adhesive sheet in contact with the hydrophilic agent layer is not applied with sufficient adhesion in a normal state. Thus, the second embodiment of the present invention provides, as another sheet, i.e. second adhesive sheet, a coating adhesive sheet comprising:
(A) a flexible substrate, and
(B) an adhesive layer provided on the back surface of the flexible layer, the adhesive layer containing a coupling agent. With such a construction of coating adhesive sheet, even when exposed to water such as rainwater for a long time, lowering of adhesion (peel resistance) between the surface of the protective layer of the first adhesive sheet and the second adhesive sheet, that is, lowering of the water resistant adhesion can be prevented.

According to the present invention, the surface of the coating adhesive sheet, that is, front surface of the flexible substrate is also provided with a protective layer to improve the dirt resistance, preferably. As such a protective layer, for example, a layer comprising (a) a fluorine polymer, (b) a non-fluorine polymer and (c) a hydrophilic agent is preferred. As is apparent from the above description, this protective layer is a thermoplastic resin layer, particularly preferably.

Furthermore, according to the present invention, an adhesive structure which will be described below can also be provided. That is, it is an adhesive structure comprising (1) an adherend, (2) a first adhesive sheet of an adhesive sheet of the present invention, the surface of the adherend being coated with the first adhesive sheet, and (3) a second adhesive sheet of a coating adhesive sheet of the present invention, the surface of the first adhesive sheet being coated with the second adhesive sheet. Such an adhesive structure can be preferably used as signboard for outdoor application.

Subsequently, the adhesive sheet and coating adhesive sheet of the present invention will be described in order by way of constituent elements thereof.

### 1. Flexible substrate

In the adhesive sheet according to the present invention, as the flexible substrate, those used in a conventional adhesive sheet can be used. Considering the processability, application properties, weathering resistance and cost, a film made of a vinyl chloride resin is preferred. Colorants such as pigments, ultraviolet absorbers for improving the weathering resistance, thermal stabilizers, and plasticizers for imparting the flexibility can be added to the resin of the substrate film. Since comparatively high flexibility is required on application to an adherend having distortion on the surface or an adherend requiring conformability, a resin film having an elongation at break of not less than 100% is preferred as the substrate. As the resin of the substrate film, acrylic resin, polyolefin resin, polyester resin and polyurethane resin can also be used, in addition to the vinyl chloride resin.

Visibility in the nighttime can also be enhanced by using a sheet having high reflectivity, such as retroreflective sheet, as the substrate. The adhesive sheet including such a sheet having high visibility in the nighttime is useful for formation of a road sign.

The thickness of the substrate is not specifically limited as far as the pliability can be maintained, but is usually within a range from 10 to 2,000 µm, and preferably from 20 to 1,000 µm.

### 2. Adhesive layer

As the adhesive layer to be provided on the back surface of the flexible substrate, those used in a conventional adhesive sheet can be used. Such an adhesive layer is usually a layer containing an adhesive such as pressure-sensitive adhesive (adhesive mass), heat-sensitive adhesive (including hot-melt adhesive), solvent activation type adhesive or the like. Considering the processability, application properties, weathering resistance and cost, an acrylic adhesive is preferred. Ultraviolet absorbers for improving the weathering resistance and thermal stabilizers can be added to the adhesive. To improve the adhesion, for example, crasslinking agents (curing agents), tackifiers and plasticizers can also be added. Furthermore, coupling agents are preferably added to effectively improve the water resistant adhesion, as described in detail hereinafter.

Considering that the adhesive sheet is applied onto an adherend having distortion on the surface or an adherend requiring conformability, an adhesive having a peel strength (180 degree peel) of 5 to 50 N/25 mm is preferably used for formation of the adhesive layer.

As the adhesive, for example, polyolefin, polyester, polyurethane, silicone (including modified silicone such as silicone polyurea) and epoxy adhesives can also be used, in addition to the above-mentioned acrylic adhesives.

The adhesive layer can be formed from a coated film of a coating solution containing an adhesive using a conventional coating method. The thickness of the adhesive layer is not specifically limited, but is usually within a range from 5 to 500 µm, and preferably from 10 to 300 µm.

### 3. Protective layer

As described above, the protective layer to be provided on the surface of the flexible substrate is a thermoplastic resin layer containing (a) a fluorine copolymer, (b) a non-fluorine polymer, and (c) a hydrophilic agent.

While not intending to be bound by theory, the fluorine copolymer is believed to enhance the dirt resistance of the protective layer. However, in preferred embodiments, a hydrophilic agent may also be employed to achieve this feature. It is also presently believed that to stably form a hydrophilic agent layer on the surface of the protective layer, a non-fluorine polymer is helpful. The non-fluorine copolymer is also believed to help enhance the adhesion (peel resistance) between the protective layer and the substrate.

From the above points of view, a weight ratio of the fluorine copolymer (F) to the non-fluorine polymer (N), the both being contained in the protective layer, is usually within a range from 55:45 to 80:20, preferably from 57:43 to 77:23, and particularly preferably from 60:40 to 75:25. When the amount of the fluorine copolymer is smaller than the above range, the dirt resistance of the protective layer may not be enhanced. On the other hand, when the amount of the non-fluorine polymer is smaller than the above range, the hydrophilic agent layer may not be stably formed on the surface of the protective layer. As a result, the dirt resistance of the protective layer may not be effectively enhanced. Also, when the amount of the non-fluorine polymer is smaller than the above range, the adhesion between the protective layer and the substrate may be lowered.

As the non-fluorine polymer, for example, acrylic, polyolefin, polyester, polyurethane and silicone (including modified silicone such as silicone polyurea) polymers can be used. An acrylic polymer is preferred. Use of the acrylic polymer as the non-fluorine polymer of the protective layer has an effect of facilitating stable formation of the layer of the hydrophilic agent layer onto the surface of the protective layer. The term "polymer" used herein means homopolymers and copolymers such as two-component and multi-component copolymers as is generally recognized in the field of polymer chemistry. Accordingly, methyl methacrylate homopplymer and methyl acrylate copolymer containing the other polymerization unit are preferred as the acrylic polymer.

The fluorine copolymer may be any copolymer containing a fluorine atom in the molecule, but is preferably a copolymer containing a vinylidene fluoride unit in the molecule. That is, it is a vinylidene fluoride copolymer containing a vinylidene fluoride unit and the other polymerization unit in the molecule. The vinylidene fluoride copolymer can exert an effect of easily enhancing the adhesion with the substrate without crosslinking the protective layer. As the other polymerization unit to be used in combination with the vinylidene fluoride unit, for example, a polymerization unit containing no active hydrogen is preferred. Because the protective layer is prevented from substantially crosslinking it is maintained in a thermoplastic state. The other polymerization unit is preferably a polymerization unit formed from ethylene tetrafluorides substituted with chlorine, such as ethylene tetrafluoride, ethylene trifluoride chloride, etc., vinylidene chloride, and (meth)acrylyates such as methyl (meth)acrylate as a starting monomer.

The amount of the hydrophilic agent is usually from 1 to 40% by weight, preferably from 5 to 30% by weight, and particularly preferably from 10 to 20% by weight, based on the total weight of the protective layer. When the amount of the hydrophilic agent is too small, the dirt resistance of the protective layer may be not effectively enhanced. On the other hand, when the amount is too large, the adhesion between the protective layer and the substrate or strength (scratch resistance) of the protective layer may be lowered.

In addition to the above-mentioned components (a) to (c), ultraviolet absorbers, stabilizers or other additives can be added to the protective layer for the purpose of improving the weathering resistance, stability and other performances.

A method of forming the protective layer is not specifically limited, but a method of coating a coating solution, prepared by dissolving or dispersing the above-mentioned components in a solvent, and drying the solution is recommended. The thickness of the protective layer is usually from 1 to 20 µm, preferably from 2 to 10 µm, and particularly preferably from 3 to 5 µm. When the thickness of the protective layer is too small, the strength of the protective layer may be lowered. On the other hand, when the thickness is too large, the pliability or elongation of the whole adhesive sheet may be lowered, thereby making it difficult to apply onto an adherend having distortion on the surface or an adherend requiring conformability.

### 4. Hydrophilic agent

The hydrophilic agent is preferably a compound represented by the following general formula (I):

Z-X-O-Rf (I)

wherein Z represents an organic group, X represents -C=O (carbonyl group) or - SO₂ (sulfonyl group), and Rf represents an organic group which may contain an oxygen atom, in which all or a portion of hydrogen atoms are substituted with fluorine atom(s). This compound preferably reacts by excitation energy of heat or light, thereby dissociating a binding between Rf in the formula and an oxygen atom.

A mechanism wherein such a compound imparts hydrophilicity to the surface of the protective layer, thereby to maintain the water contact angle at a predetermined low range for a long period of time is not clear, but is considered as follows. That is, since Rf is substituted with fluorine, the surface transfer property of this compound is high and a layer of this compound (hydrophilic agent) can be easily formed on the surface of the protective layer. Dissociation of the binding between Rf in the formula and oxygen atom can be effectively enhanced by a chemical action (electron withdrawing action) of a fluorine atom. Accordingly, chemical species having a hydrophilic group (moiety containing X-O in the formula) such as carboxylic group, sulfonic group, etc. generated as a result of dissociation of such a compound effectively enhance the hydrophilicity of the surface of the protective layer.

Specific examples of such a compound include fluorine-containing polysiloxane GH-100 manufactured by Daikin Industries Co., Ltd. Other examples thereof include those represented by the following general formulas (II) to (VIII).

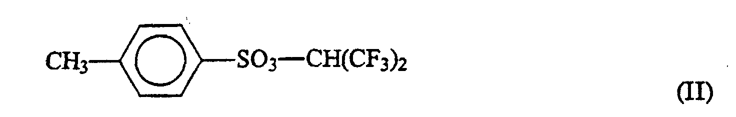

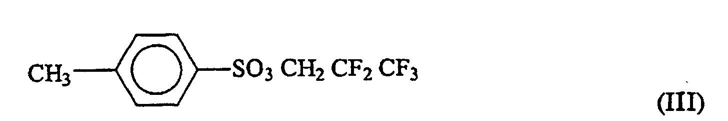

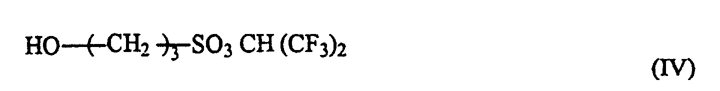

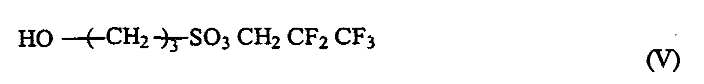

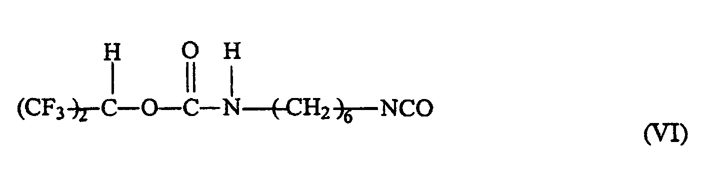

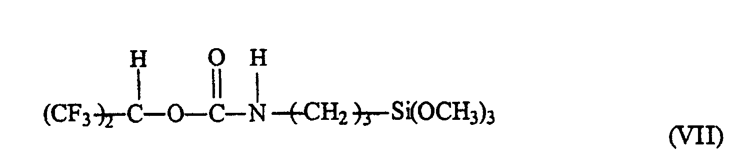

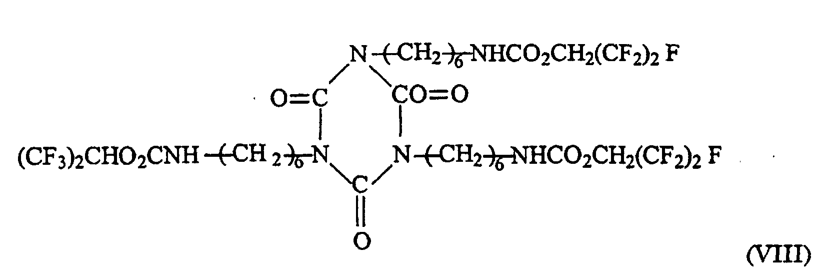

### 5. Coupling agent

As described above, the coating adhesive sheet according to the present invention preferably comprises (A) a flexible substrate and (B) an adhesive layer provided on the back surface of the flexible substrate, the adhesive layer further containing a coupling agent. While not intending to be bound by theory, this coating adhesive sheet is believed to effectively prevent lowering of the water resistant adhesion to the hydrophilic surface because of existence of the coupling agent even when exposed to water such as rainwater for a long time. As the coupling agent, for example, silane coupling agent and titanium coupling agent (organic titanate) can be used.

Preferred examples of the silane coupling agent include aminosilanes such as N-β(aminoethyl)γ-aminopropyltrimethoxysilane,γ-aminopropyltrimethoxysilane,γ-aminopropyltriethoxysilane, N-phenyl-γ-aminopropyltrrnethoxysilane, etc., thiolsilane, epoxysilane, ureasilane and the like.

As the titanium coupling agent (organic titanate), for example, there can be used tetraalkoxy titanium, and titanate having such a structure that a portion of alkoxy groups is substituted with an acetyl acetonate group or an aminoethylaminoethoxy group. For example, tetraisopropoxy titanium (TPT), tetraethoxy titanium, tetrabutoxy titanium and tetrastearylalkoxy titanium are preferred.

The amount of the coupling agent contained in the adhesive layer is usually within a range from 0.02 to 5% by weight, preferably from 0.05 to 3% by weight, and particularly preferably from 0.1 to 2% by weight, based on the total weight of the adhesive layer. When the amount of the coupling agent is too small, the water resistant adhesion may not be effectively enhanced. On the other hand, when the amount is too large, the water resistant adhesion may not be improved and other adhesion characteristics (e.g. tack on application) is lowered. The coupling agents can be used alone or in combination. For example, the silane coupling agent can be used in combination with the titanium coupling agent.

### Examples

The present invention will now be described with reference to its examples. It is appreciated that the present invention is not limited to the following examples.

### Example 1

Coating solution for forming a protective layer was prepared according to the following formula.

| Component | Parts by weight |
|---|---|
| 1) Acrylic polymer | 8.1 |
| 2) Fluorine copolymer | 4.4 |
| 3) Hydrophilic agent | 2.9 |
| 4) Methylethylketone | 42.3 |
| 5) Toluene | 42.3 |
| Footnote) Details of component | |
| 1) Acrylic polymer ... Methyl methacrylate resin, Elvacite™ 2021, manufactured by Du Pont Co. | |
| 2) Fluorine copolymer ... Vinylidene fluoride/polychlorotrifluoroethylene (55/45) copolymer, Tg = -25°C | |
| 3) Hydrophilic agent ... Fluorine-containing polysiloxane, GH-100, manufactured by Daikin Industries Co., Ltd. | |

The resulting coating solution was coated on the surface of a substrate of an adhesive sheet (manufactured by Sumitomo 3M Co., Ltd., Schotchcal™ Film 3650CF) in a dry thickness of 3 µm, and then dried at 65°C for 10 minutes. As a result, an adhesive sheet provided with a protective layer of this example was obtained. The substrate of the adhesive sheet used in this example was a vinyl chloride film.

Then, characteristics of the adhesive sheet of this example were evaluated with respect to five items, e.g. elongation at break, adhesion of protective layer, pot life, water contact angle and dirt resistance. The evaluation was conducted according to the following procedure.

### (Evaluation procedure)

### (1) Elongation at break of adhesive sheet

The elongation at break was measured when an adhesive sheet having a width of 25 mm was stretched at a stretch rate of 30 cm/minutes.

### (2) Adhesion of protective layer

A grid-patterned cut was made on a portion of the surface of a protective layer of an adhesive tape using a cutter knife and an adhesive tape [Scotch™ Mending Tape, manufactured by 3M Co.] was applied onto the portion provided with the cut, and then a peel test was conducted. It was visually observed whether the protective tape was peeled off or not when the adhesive tape was forcibly peeled off from the adhesive sheet. Samples where any peel was not observed were rated "pass", while samples where slight peel was observed were rated "fail".

### (3) Pot life

The pot life of an adhesive sheet was experimentally determined by measuring a change in viscosity of a coating solution. The coating solution was prepared according to a predetermined formula and its viscosity was measured with a lapsed time using a B (Brookfield) type viscometer. The time until the measured viscosity becomes double the initial value was recorded as the pot life.

### (4) Water contact angle

Water droplets were dropped on the surface of a protective layer of an adhesive sheet and the contact angle between the surface of the protective layer and water was measured on a contact angle meter, commercially available under the trade name "CA-Z" from Kyowa Interface Science Co., Ltd., according to the guideline described in the manual.

### (5) Dirt resistance

An adhesive sheet was allowed to stand indoors and outdoors and the state of dirt was visually observed after a lapsed time of four months. Using the adhesive sheet allowed to stand indoors as a control sample, the state of dirt of the adhesive sheet allowed to stand outdoors was compared with the control sample. Samples where dirt was hardly observed were rated "excellent", samples where slight dirt was observed but could be easily removed by rubbing were rated "good", and samples where dirt, which can not be easily removed, was observed were "fail".

The results as described in Table 1 described hereinafter were obtained.

### Comparative Example 1, Comparative Example 2 and Example 2

The same procedure as in Example 1 was repeated, except that the composition of the coating solution for forming a protective layer was changed as described hereinafter in these examples. Unless otherwise stated, the same compound is used in case where the same compound name is described.

### Comparative Example 1:

This example is an example containing no hydrophilic agent. A coating solution for forming a protective layer was prepared according to the following formula.

| | |
|---|---|
| Acrylic polymer | 8.3 parts by weight |
| Fluorine copolymer | 4.5 parts by weight |
| Methyl ethyl ketone | 43.6 parts by weight |
| Toluene | 43.6 parts by weight |

### Comparative Example 2:

This example is an example using a crosslinked coated film. A coating solution for forming a protective layer was prepared according to the following formula.

| Component | Parts by weight |
|---|---|
| 1) Fluorine paint | 63.7 |
| 2) Crosslinking agent | 24.8 |
| 3) Hydrophilic agent | 11.5 |
| Footnote) Details of component | |
| 1) Fluorine paint ... ZEFFLEL™ GK510, solid content: 60% by weight, manufactured by Daikin Industries Co., Ltd. | |
| 2) Crosslinking agent ... Takenate™ D140N, isocyanate (75% by weight)/ethylene acetate (25% by weight), manufactured by Takeda Chemical Industries, Ltd. | |

### Example 2:

This example is an example wherein a comparatively large amount of a fluorine copolymer was incorporated. A coating solution for forming a protective layer was prepared according to the following formula.

| | |
|---|---|
| Acrylic polymer | 10.3 parts by weight |
| Fluorine copolymer | 2.2 parts by weight |
| Hydrophilic agent | 2.9 parts by weight |
| Methyl ethyl ketone | 42.3 parts by weight |
| Toluene | 42.3 parts by weight |

The results as described in Table 1 below were obtained.

**Table 1**

| Evaluation items | Example 1 | Comp. Example 1 | Comp. Example 2 | Example 2 |
|---|---|---|---|---|
| Elongation at break | ≧ 100% | ≧ 100% | ≦ 50% | ≧ 100% |
| Adhesion of protective layer | Pass | Pass | Fail | Fail |
| Pot life | ≧ 1 day | ≧ 1 day | ≦ 4 hrs | ≧ 1 day |
| Water contact angle | 40° | 75° | 50° | 50° |
| Dirt resistance | Excellent | Fail | Good | Good |

### Example 3

A coating adhesive sheet according to the present invention was produced according to the following procedure.

The same adhesive sheet as that used for producing the adhesive sheet in Example 1 was used. In this example, however, an adhesive layer was formed by using a coating solution for forming an adhesive layer of the formula shown below in place of the adhesive sheet used in Example 1.

| Component | Parts by weight |
|---|---|
| 1) Acrylic adhesive | 97.8 |
| 2) Chelate curring agent | 2.0 |
| 3) Silane coupling agent | 0.2 |
| Footnote) Details of component | |
| 1) Acrylic adhesive ... AR2018L, solid content: 35% by weight, solvent: toluene/ethyl acetate, manufactured by Nippon Shokubai Co. | |
| 2) Chelate curing agent ... Coronate™ L55E, solid content: 55% by weight, NCO = 10%, manufactured by Nippon Polyurethane Industry Co. | |
| 3) Silane coupling agent ... KBM603, manufactured by Shinetsu Chemical Co; | |

This coating solution was coated on the back surface of a vinyl chloride substrate and then dried at 65°C for 10 minutes. The dry thickness of the adhesive layer was 30 µm. Then, a protective layer was provided on the surface of the vinyl chloride substrate whose back surface is provided with the adhesive layer in the same procedure as in Example 1 to obtain a coating adhesive sheet of this example.

To evaluate adhesion characteristics of the resulting coating adhesive sheet, the coating adhesive sheet (cut into size of 25 mm in width) of this example was applied onto the surface of protective layer of the adhesive sheet produced in Example 1 and an aging test was conducted under different conditions as described in Table 2 described below. After the completion of each aging test, the adhesion (water resistant adhesion) of the coating adhesive sheet was measured under the conditions of a width of 25 mm, a peel angle of 90° and a peel rate of 30 cm/min. The measurement results thus obtained are shown in Table 2 below.

### Comparative Example 3

In the same procedure as in Example 3, except that incorporation of a silane coupling agent was omitted for comparison in this example, a coating adhesive sheet was produced. In the same manner as in Example 3, the water resistant adhesion was measured to obtain the results as shown in Table 2 below.

**Table 2**

| Aging conditions | Adhesive strength (N/25 mm) | |
|---|---|---|
| | Example 3 | Comp. Example 3 |
| Standing in room at 25°C for 48 hours | 22.0 | 29.7 |
| Standing at 40°C, 95%RH for 1 week | 23.3 | 16.3 |
| Dipping in water at 40°C for 1 day | 21.8 | < 1 |
| Dipping in water at 40°C for 3 days | 11.3 | < 1 |
| Dipping in water at 40°C for 7 days | 7.5 | < 1 |

As is apparent from the measurement results described in Table 2, the water resistant adhesion of the coating adhesive sheet can be effectively prevented from lowering by adding a silane coupling agent to the adhesive layer, thereby maintaining the adhesion within a range suited for practical use (wherein the sheet is not peeled off even when exposed to the weather outdoors).

As described above, according the present invention, since a layer of a hydrophilic agent can be stably formed on the surface of a protective layer of an adhesive sheet, the dirt resistance of the adhesive sheet can be maintained for a long period of time.
Since the flexibility (pliability) of the whole adhesive sheet is not deteriorated with a lapsed time, it is effective when the adhesive tape is applied to adherends having distortion on the surface or adherends requiring conformability (e.g. those having the surface including the curved surface).

Furthermore, the present invention is effective when another adhesive sheet (e.g. adhesive sheet cut into forms of design, letter, etc.) is applied onto the surface of an adhesive sheet applied onto the surface of outdoor adherends such as walls of buildings, signboards, etc. In the present invention, since a layer of a hydrophilic agent is formed on the surface of a protective layer of an adhesive sheet as a ground, water resistant adhesion between the surface of the protective layer of the adhesive sheet and another adhesive sheet is not lowered even when the adhesive sheet is exposed to water such as rainwater for a long time.

## Claims

1. An adhesive sheet comprising a flexible substrate, an adhesive layer provided on the back surface of the flexible substrate, and a protective layer provided on the front surface of the flexible substrate, **characterized in that**:
the protective layer is a thermoplastic resin layer containing (a) a fluorine copolymer, (b) a non-fluorine polymer, and (c) a hydrophilic agent having a decomposable fluorine-containing protective group.

2. The adhesive sheet according to claim 1, wherein a water contact angle, determined in a contact angle meter, of the surface of the protective layer is not more than 50 degrees.

3. A coating adhesive sheet for coating the protective layer of the adhesive sheet of claim 1, **characterized in that**:
the coating adhesive sheet comprises a flexible substrate and an adhesive layer provided on the back surface of the flexible substrate, and the adhesive layer contains a coupling agent.

4. The coating adhesive sheet according to claim 3, further comprising a protective layer provided on the front surface of the flexible substrate, wherein the protective layer contains (a) a fluorine copolymer, (b) a non-fluorine polymer, and (c) a hydrophilic agent.

## Patentansprüche

1. Klebeflächengebilde, umfassend ein flexibles Substrat, eine auf der Rückseite des flexiblen Substrats bereitgestellte Klebeschicht, und eine auf der Vorderseite des flexiblen Substrats bereitgestellte Schutzschicht, **dadurch gekennzeichnet, dass**:
die Schutzschicht eine Schicht aus einem thermoplastischen Harz ist, welche (a) ein Fluorcopolymer, (b) ein nicht-Fluor Polymer und (c) ein hydrophiles Mittel mit einer abspaltbaren, fluorenthaltenden Schutzgruppe enthält.

2. Klebeflächengebilde gemäß Anspruch 1, wobei der mit einem Kontaktwinkelmessgerät bestimmte Wasserkontaktwinkel auf der Oberfläche der Schutzschicht nicht mehr als 50 Grad beträgt.

3. Beschichtungsklebeflächengebilde zum Beschichten der Schutzschicht des Klebeflächengebildes nach Anspruch 1, **dadurch gekennzeichnet, dass**:
das Beschichtungsklebeflächengebilde ein flexibles Substrat und eine auf der Rückseite des flexiblen Substrats bereitgestellte Klebeschicht umfasst, und die Klebeschicht einen Haftvermittler enthält.

4. Beschichtungsklebeflächengebilde gemäß Anspruch 3, weiterhin umfassend eine auf der Vorderseite des flexiblen Substrats bereitgestellte Schutzschicht, wobei die Schutzschicht (a) ein Fluorcopolymer, (b) ein nicht-Fluor Polymer und (c) ein hydrophiles Mittel enthält.

## Revendications

1. Feuille adhésive comprenant un substrat flexible, une couche adhésive fournie sur la surface arrière du substrat flexible, et une couche de protection fournie sur la surface frontale du substrat flexible, **caractérisée en ce que** :
la couche de protection est une couche de résine thermoplastique contenant (a) un copolymère fluoré, (b) un polymère sans fluor, et (c) un agent hydrophile, ayant un groupe de protection contenant du fluor décomposable.

2. Feuille adhésive selon la revendication 1, dans laquelle l'angle de contact d'eau, déterminé dans un appareil de mesure, d'angle de contact, de la surface de la couche de protection, n'est pas supérieur à 50°.

3. Feuille adhésive de revêtement pour revêtir la couche de protection de la feuille adhésive selon la revendication 1, **caractérisée en ce que** :
la feuille adhésive de revêtement comprend un substrat flexible et une couche adhésive fournie sur la surface arrière du substrat flexible, et la couche adhésive contient un agent de couplage.

4. Feuille adhésive de revêtement selon la revendication 3, comprenant de plus une couche de protection fournie sur la surface frontale du substrat flexible, dans laquelle la couche de protection contient (a) un copolymère fluoré, (b) un polymère sans fluor et (c) un agent hydrophile.
